# EUROPEAN PATENT SPECIFICATION

(11) **EP 4 270 685 B1**
(45) Date of publication and mention of the grant of the patent: **07.10.2026**
(21) Application number: 22170537.9
(22) Date of filing: 28.04.2022
(51) Int. Cl.: H01S 3/23, H01S 3/00, H01S 3/067, H01S 3/13, H01S 3/10

(54) **OPTICAL PULSE SOURCE, OPTICAL SYSTEM FOR RYDBERG EXCITATION AND METHOD OF FORMING OPTICAL PULSES**
OPTISCHE PULSQUELLE, OPTISCHES SYSTEM FÜR RYDBERG-ANREGUNG UND VERFAHREN ZUR ERZEUGUNG OPTISCHER IMPULSE
SOURCE D'IMPULSION OPTIQUE, SYSTÈME OPTIQUE POUR L'EXCITATION DE RYDBERG ET PROCÉDÉ DE FORMATION D'IMPULSIONS OPTIQUES

(43) Date of publication of application: 01.11.2023
(73) Proprietor: Hamamatsu Photonics A/S, 3460 Birkerød (DK)
(72) Inventor: JENSEN, Asger Sellerup, 3460 Birkerød (DK); PEDERSEN, Jens Engholm, 3460 Birkerød (DK)
(74) Representative: Zacco Denmark A/S

(56) References cited:
- US-A1- 2005 169 326
- US-A1- 2009 185 583
- US-A1- 2019 006 817
- US-A1- 2020 346 301

## Description

### Technical Field

The invention relates to an optical pulse source and to a method of generating optical pulses. The invention further relates to an optical system for Rydberg excitation.

### Background

Generation of optical pulses at wavelengths at which lasers cannot directly generate laser light, for example at ultraviolet, UV, wavelengths, is known to be performed by generating continuous wave, cw, laser light at high optical power, then frequency converting the high power cw laser light to the desired output wavelength and amplitude modulating the frequency converted cw laser light to form output optical pulses, having a lower peak optical power. US 2007/064749 A1 describes an alternative approach for generation of deep UV laser pulses using directly modulated semiconductor lasers to generate laser pulses, which are then amplified and frequency converted to generate laser pulses at around 198nm. US 2005/169326 A1, US 2009/185583 A1 and US 2019/006817 A1 disclose arrangements to obtain UV laser pulses by frequency conversion of amplitude modulated and amplified laser pulses resulting from two different laser sources.

### Summary

Accordingly, an optical pulse source is provided as defined in claim 1 and an optical system for Rydberg excitation is provided as defined in claim 13. Advantageous features are provided in the dependent claims.

A first aspect provides an optical pulse source comprising a first laser, a second laser, optical modulation apparatus, optical amplification apparatus and optical frequency conversion apparatus. The first laser is configured to output laser light at a first wavelength. The second laser is configured to output laser light at a second wavelength, different to the first wavelength. The optical modulation apparatus is configured to apply amplitude modulation to a first one of the laser light at the first wavelength or the laser light at the second wavelength to form first laser light pulses. The optical amplification apparatus is configured to amplify the first laser light pulses and a second one of the laser light at the first wavelength or the laser light at the second wavelength. The optical frequency conversion apparatus is configured to perform optical frequency conversion using the first laser light pulses and the laser light at the second wavelength to form output laser light pulses at a third wavelength. The third wavelength is shorter than the first wavelength and the second wavelength.

By forming the first laser light pulses prior to optical frequency conversion the optical pulse source may enable more power efficient output pulse generation than systems which form output pulses from cw laser light following optical frequency conversion to a desired third (output) wavelength. The optical pulse source may therefore form output pulses of a desired pulse peak power using lower average optical powers than is required for systems which form output pulses from cw laser light following optical frequency conversion. Advantageously, inter pulse noise is efficiently supressed during optical frequency conversion of the first laser light pulses into the output laser light pulses.

The optical modulation apparatus further comprises a second optical modulator. The first optical modulator is configured to apply amplitude modulation to the laser light at the first wavelength to form the first laser light pulses at the first wavelength. The second optical modulator is configured to apply amplitude modulation to the laser light at the second wavelength to form second laser light pulses at the second wavelength. Use of external optical modulators enables amplitude modulation of a desired form to be applied to the laser light, to form first and second laser light pulses of a desired shape.

One advantage of using a modulation apparatus to modulate the laser light at the first and/or second wavelength to form the laser light pulses is that a wide range of modulation profiles can be applied to the formed laser pulses. The pulse modulation can e.g. be optimized to compensate for down-stream shape perturbations of the of the laser light pulses introduced by the optical amplification apparatus and/or the optical frequency conversion apparatus. In prior art systems where the laser light pulses are delivered directly from first and second lasers, e.g. by directly modulated semiconductor lasers, the modulation of the lasers, and hence the pulse modulation capabilities, is limited and is not sufficient to compensate for these shape perturbations.

The optical amplification apparatus comprises a first optical amplifier configured to amplify the first laser light pulses and a second optical amplifier configured to amplify the second laser light pulses.

In an embodiment, the optical amplification apparatus is configured to be continuously pumped. Continuously pumping the optical amplification apparatus advantageously causes energy to build up within the optical amplification apparatus between pulses, which enables the optical amplification apparatus to amplify the first laser light pulses to have a high pulse peak power while pumping the optical amplification apparatus to amplify to a relatively low average power.

In an embodiment, the optical pulse source further comprises output pulse control apparatus comprising an optical detector and a controller. The optical detector is configured to detect a pulse shape of a laser light pulse and to generate an output signal indicative of the detected pulse shape. The controller comprises interface circuitry, at least one processor and memory comprising instructions executable by said processor whereby the controller is operative as follows. The controller is operative to receive an output signal indicative of a detected pulse shape from the optical detector. The controller is operative to determine a difference between the detected pulse shape and a target pulse shape. The controller is operative to determine a compensating pulse shape for the first laser light pulses. The compensating pulse shape configured to at least partly compensate for the difference between the detected pulse shape and the target pulse shape. The controller is operative to generate at least one drive signal for the optical modulation apparatus. The at least one drive signal is configured to cause the optical modulation apparatus to apply amplitude modulation to form first laser light pulses having the compensating pulse shape.

Forming the first laser light pulses having a compensating pulse shape may enable the optical pulse source to compensate for pulse shape perturbations introduced by the optical amplification apparatus and/or the optical frequency conversion apparatus, which may advantageously enable the optical pulse source to form output laser light pulses having a target pulse shape independent of such pulse shape perturbations.

The optical modulation apparatus comprises a first optical modulator and a second optical modulator. The first optical modulator is configured to apply amplitude modulation to the laser light at the first wavelength to form the first laser light pulses at the first wavelength and the second optical modulator is configured to apply amplitude modulation to the laser light at the second wavelength to form second laser light pulses at the second wavelength. In an embodiment, the controller is operative to determine at least one of a first compensating pulse shape for the first laser light pulses or a second compensating pulse shape for the second laser light pulses. The at least one drive signal is configured to cause at least one of the first optical modulator to apply amplitude modulation to form the first laser light pulses having the first compensating pulse shape or the second optical modulator to apply amplitude modulation to form the second laser light pulses having the second compensating pulse shape.

Forming the first laser light pulses and the second laser light pulses having a compensating pulse shape may enable the optical pulse source to compensate for pulse shape perturbations introduced by the optical amplification apparatus and/or the optical frequency conversion apparatus, which may advantageously enable the optical pulse source to form output laser light pulses having a target pulse shape independent of such pulse shape perturbations.

In an embodiment, the optical detector is configured to detect a pulse shape of a laser light pulse output from the optical frequency conversion apparatus.

In an embodiment, the optical detector is configured to detect a pulse shape of a laser light pulse output from the optical amplification apparatus.

In an embodiment, the target pulse shape is one of a square pulse or a Gaussian pulse.

In an embodiment, the at least one drive signal is further configured to cause the optical modulation apparatus to apply amplitude modulation to form first laser light pulses having a pulse duration of up to 1 µsand a pulse repetition rate in a range 0.1kHz to 1MHz.

In an embodiment, the first laser light pulses have a pulse duration of up to 500ns.

In an embodiment, the first laser light pulses have a pulse duration in the range 1ns to 500ns.

The optical modulation apparatus is further configured to apply phase modulation the laser light at the first wavelength and/or the laser light at the second wavelength. In an embodiment, the controller is further operative to determine a phase-offset for the first laser light pulses and to generate the at least one drive signal configured to cause the optical modulation apparatus to additionally apply phase modulation to said one of the laser light at the first wavelength or the laser light at the second wavelength to form the first laser light pulses with the phase-offset between subsequent laser light pulses. This may enable the optical pulse source to form output laser light pulses having a fixed phase-offset between subsequent pulses.

In an embodiment, the first optical modulator is further configured to apply phase modulation to the laser light at the first wavelength and the second optical modulator is further configured to apply phase modulation to the laser light at the second wavelength. The controller is further operative to determine a phase-offset for the first laser light pulses and the second laser light pulses. The controller is further operative to generate the at least one drive signal configured to cause the first optical modulator to additionally apply phase modulation to the first laser light at the first wavelength to form the first laser light pulses with the phase-offset between subsequent first laser light pulses and to cause the second optical modulator to additionally apply phase modulation to the laser light at the second wavelength to form the second laser light pulses with the phase-offset between subsequent second laser light pulses. This may enable the optical pulse source to form output laser light pulses having a fixed phase-offset between subsequent pulses.

In an embodiment, the optical frequency conversion apparatus is configured to perform the optical frequency conversion by second harmonic generation, SHG, and one of sum frequency generation, SFG, or difference frequency generation, DFG. Use of SHG within the optical frequency generation apparatus advantageously enables efficient suppression of inter-pulse noise in addition to frequency doubling. SHG is intensity dependent, so higher power parts of the first laser light pulses are frequency converted more efficiently and lower power inter-pulse noise is efficiently suppressed.

In an embodiment, the optical frequency conversion apparatus comprises SFG apparatus and SHG apparatus. The SFG apparatus is configured to perform sum frequency generation using the first laser light pulses and the laser light at the second wavelength, to form sum frequency laser light pulses. The SHG apparatus is configured to perform frequency doubling of the sum frequency laser light pulses, to form the output laser light pulses. Advantageously, the SFG apparatus is able to perform sum frequency generation to form sum frequency laser light pulses whether the other of the laser light at the first wavelength or the laser light at the second wavelength comprises cw laser light or second laser light pulses.

In an embodiment, the first wavelength is in a first one of a range 1050nm to 1110nm or a range 1535nm to 1590nm, the second wavelength is in a second one of the range 1050nm to 1110nm or the range 1535nm to 1590nm, and the output laser light pulses have a wavelength of one of 317nm or 318nm. The optical pulse source may advantageously provide output laser light pulses at wavelengths suitable for Rydberg excitation of Strontium atoms or Caesium atoms.

In an embodiment, the first wavelength is a first one of 1064nm or 1560nm, the second wavelength is a second one of 1064nm or 1560nm, and the output laser light pulses have a wavelength of 317nm. The optical pulse source may advantageously provide output laser light pulses at wavelengths suitable for Rydberg excitation of Strontium atoms.

In an embodiment, the first wavelength is a first one of 1072.8nm or 1550nm, the second wavelength is a second one of 1072.8nm or 1550nm, and the output laser light pulses have a wavelength of 317nm. The optical pulse source may advantageously provide output laser light pulses at wavelengths suitable for Rydberg excitation of Strontium atoms.

In an embodiment, the first wavelength is a first one of 1078.6nm or 1550nm, the second wavelength is a second one of 1078.6nm or 1550nm, and the output laser light pulses have a wavelength of 318nm. The optical pulse source may advantageously provide output laser light pulses at wavelengths suitable for Rydberg excitation of Caesium atoms.

In an embodiment, the optical frequency conversion apparatus comprises first SHG apparatus, SFG apparatus and second SHG apparatus. The first SHG apparatus is configured to perform frequency doubling of the first laser light pulses, to form frequency doubled laser light pulses. The SFG apparatus is configured to perform sum frequency generation using the frequency doubled laser light pulses and the laser light at the second wavelength, to form sum frequency laser light pulses. The second SHG apparatus is configured to perform frequency doubling of the sum frequency laser light pulses, to form the output laser light pulses. Advantageously, the SFG apparatus is able to perform sum frequency generation to form sum frequency laser light pulses whether the other of the laser light at the first wavelength or the laser light at the second wavelength comprises cw laser light or second laser light pulses.

In an embodiment, the first wavelength is a first one of 1566nm or 1966nm, the second wavelength is a second one of 1566nm or 1966nm, and the output laser light pulses have a wavelength of 302nm. The optical pulse source may advantageously provide output laser light pulses at wavelengths suitable for Rydberg excitation of Ytterbium atoms.

In an embodiment, the first wavelength is a first one of 1559nm or 1970nm, the second wavelength is a second one of 1559nm or 1970nm, and the output laser light pulses have a wavelength of 302nm. The optical pulse source may advantageously provide output laser light pulses at wavelengths suitable for Rydberg excitation of Ytterbium atoms.

In an embodiment, the optical frequency conversion apparatus comprises first SHG apparatus, DFG apparatus and second SHG apparatus. The first SHG apparatus is configured to perform frequency doubling of the first laser light pulses, to form frequency doubled laser light pulses. The DFG apparatus is configured to perform difference frequency generation using the frequency doubled laser light pulses and the other of the laser light at the first wavelength or the laser light at the second wavelength, to form difference frequency laser light pulses. The second SHG apparatus is configured to perform frequency doubling of the difference frequency laser light pulses, to form the output laser light pulses. Advantageously, the DFG apparatus is able to perform difference frequency generation to form difference frequency laser light pulses whether the other of the laser light at the first wavelength or the laser light at the second wavelength comprises cw laser light or second laser light pulses.

In an embodiment, the first wavelength is a first one of 1560nm or 1092nm, the second wavelength is a second one of 1560nm or 1092nm, and the output laser light pulses have a wavelength of 420nm. The optical pulse source may advantageously provide output laser light pulses at wavelengths suitable for Rydberg excitation of Rubidium atoms.

Corresponding embodiments and advantages apply also to the optical system for Rydberg excitation and the method of forming optical pulses described below.

A second aspect provides an optical system for Rydberg excitation, the optical system comprising an optical pulse source and an excitation chamber. The optical pulse source comprises a first laser, a second laser, optical modulation apparatus, optical amplification apparatus and optical frequency conversion apparatus. The first laser is configured to output laser light at a first wavelength. The second laser is configured to output laser light at a second wavelength, different to the first wavelength. The optical modulation apparatus is configured to apply amplitude modulation to a first one of the laser light at the first wavelength or the laser light at the second wavelength to form first laser light pulses. The optical amplification apparatus is configured to amplify the first laser light pulses and a second one of the laser light at the first wavelength or the laser light at the second wavelength. The optical frequency conversion apparatus is configured to perform optical frequency conversion using the first laser light pulses and the second one of the laser light at the first wavelength or the laser light at the second wavelength to form output laser light pulses at a third wavelength. The third wavelength is shorter than the first wavelength and the second wavelength.

Embodiments of the invention will now be described, by way of example only, with reference to the accompanying drawings.

### Brief Description of the drawings

Figures 1 and 2 are block diagrams illustrating example optical pulse sources;
Figures 3 to 11 are block diagrams illustrating embodiments of an optical pulse source;
Figures 12 to 15 are block diagrams illustrating embodiments of an optical pulse source and embodiments of an optical system for Rydberg excitation; and
Figure 16 is a flowchart illustrating a method of forming an optical pulse.

### Detailed description

The same reference numbers are used for corresponding features in different figures.

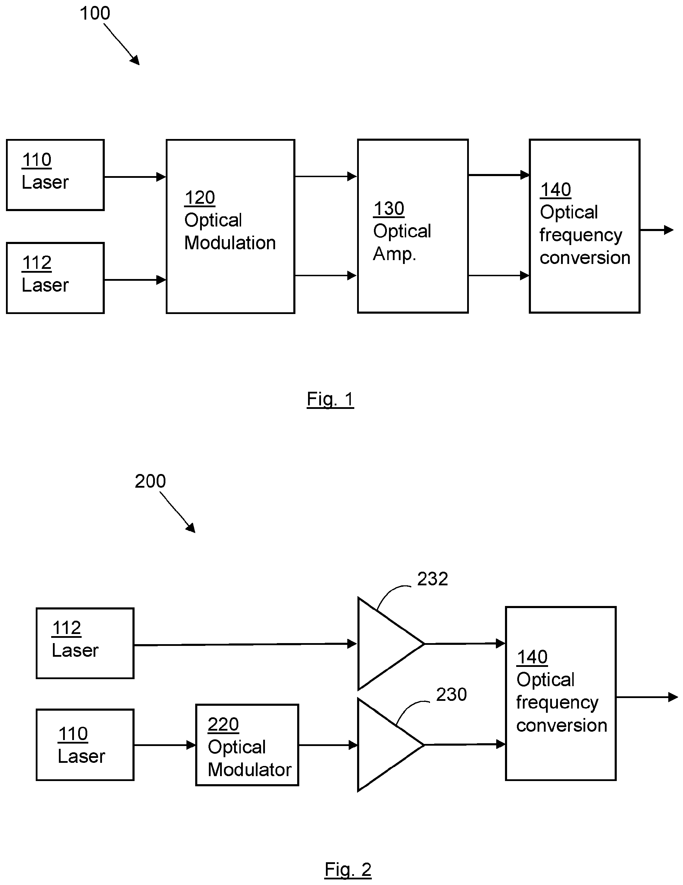

Figure 1 illustrates an example of an optical pulse source 100 comprising a first laser 110, a second laser 112, optical modulation apparatus 120, optical amplification apparatus 130 and optical frequency conversion apparatus 140.

The first laser 110 is configured to output laser light at a first wavelength. The second laser 112 is configured to output laser light at a second wavelength, different to the first wavelength. The optical modulation apparatus 120 is configured to apply amplitude modulation to a first one of the laser light at the first wavelength or the laser light at the second wavelength to form first laser light pulses. The optical amplification apparatus 130 is configured to amplify the first laser light pulses and a second one of the laser light at the first wavelength or the laser light at the second wavelength. The optical frequency conversion apparatus 140 is configured to perform optical frequency conversion using the first laser light pulses and the second one of the laser light at the first wavelength or the laser light at the second wavelength to form output laser light pulses at a third wavelength. The third wavelength is shorter than the first wavelength and the second wavelength.

Figure 2 illustrates an example of an optical pulse source 200 similar to that shown in Figure 1. The optical modulation apparatus in Figure 2 comprises a first optical modulator 220, for example an acousto-optic modulator, AOM, configured to apply amplitude modulation to the laser light at the first wavelength. The optical amplification apparatus comprises a first optical amplifier 230 configured to amplify the first laser light pulses and a second optical amplifier 232 configured to amplify the laser light at the second one of the laser light at the first wavelength or the laser light at the second wavelength.

In an embodiment, the first optical amplifier 230 is configured to be continuously pumped. The first optical amplifier may, for example, be one of an Erbium-doped fibre amplifier, EDFA, a Ytterbium-doped fibre amplifier, YDFA, a Thulium-doped fibre amplifier, TDFA, or a Holmium-doped fibre amplifier, HDFA. Selection of which of these types of optical amplifier will depend upon the first wavelength of the laser light generated by the first laser 110, as will be well known to the person skilled in the art.

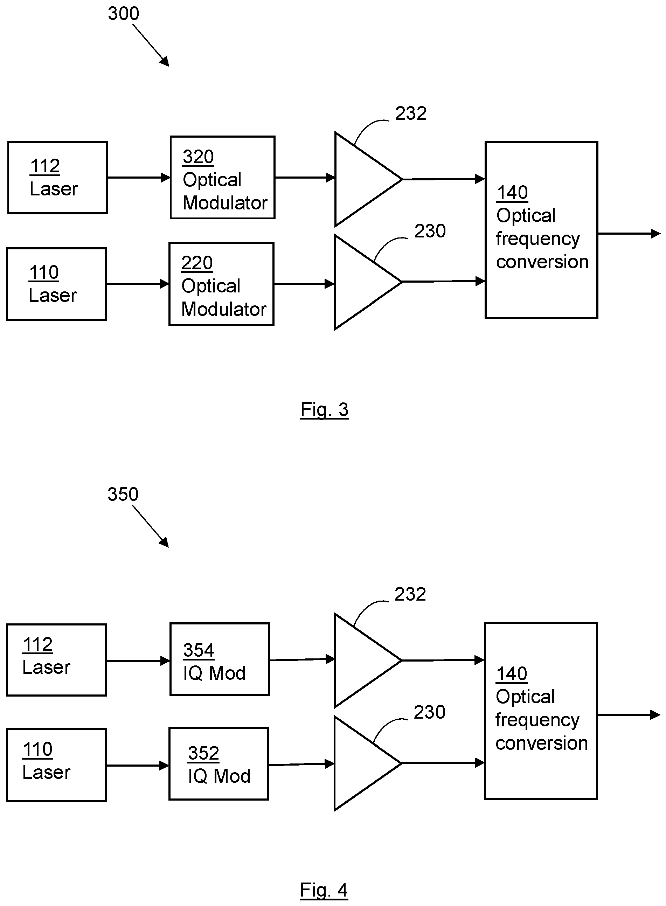

An embodiment provides an optical pulse source 300 as shown in Figure 3. In this embodiment, the optical modulation apparatus comprises a first optical modulator 220 and a second optical modulator 320. For example, the first and second optical modulators 220, 320 may be AOMs. The first optical modulator 220 is configured to apply amplitude modulation to the laser light at the first wavelength to form the first laser light pulses at the first wavelength. The second optical modulator 320 is configured to apply amplitude modulation to the laser light at the second wavelength to form second laser light pulses at the second wavelength.

The optical amplification apparatus comprises a first optical amplifier 230 configured to amplify the first laser light pulses and a second optical amplifier 232 configured to amplify the second laser light pulses.

In an embodiment, the first optical amplifier 230 is configured to be continuously pumped and the second optical amplifier 232 is configured to be continuously pumped. Each of the optical amplifiers may, for example, be one of an Erbium-doped fibre amplifier, EDFA, a Ytterbium-doped fibre amplifier, YDFA, a Thulium-doped fibre amplifier, TDFA, or a Holmium-doped fibre amplifier, HDFA. Selection of which of these types of optical amplifier will depend upon the wavelengths of the laser light generated by each of the first laser and the second laser, as will be well known to the person skilled in the art.

An embodiment provides an optical pulse source 350 as shown in Figure 4, in which the optical modulation apparatus is further configured to apply phase modulation to said one of the laser light at the first wavelength or the laser light at the second wavelength. In the embodiment illustrated in Figure 4, the optical modulation apparatus comprises a first IQ modulator 352 and a second IQ modulator 354. The first IQ modulator is configured to apply amplitude modulation and phase modulation to the laser light at the first wavelength to form first laser light pulses at the first wavelength. The second IQ modulator is configured to apply amplitude modulation and phase modulation to the laser light at the second wavelength to form second laser light pulses at the second wavelength.

The optical modulation apparatus of this embodiment may alternatively comprise a first AOM, a first electro-optic modulator, EOM, a second AOM and a second EOM. The first AOM is configured to apply amplitude modulation to the laser light at the first wavelength to form first laser light pulses at the first wavelength and the first EOM is configured to apply phase modulation to the first laser light pulses. The second AOM is configured to apply amplitude modulation to the laser light at the second wavelength to form second laser light pulses at the second wavelength and the second EOM is configured to apply phase modulation to the second laser light pulses.

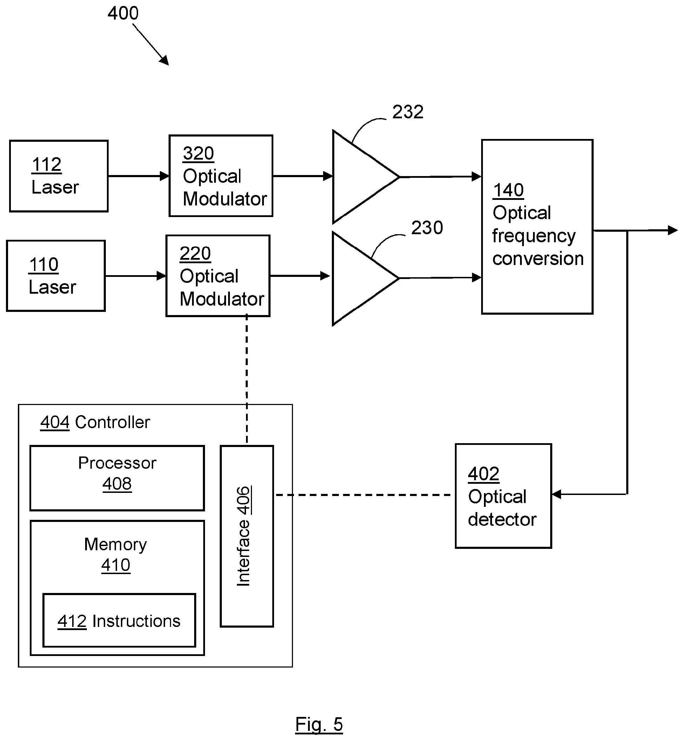

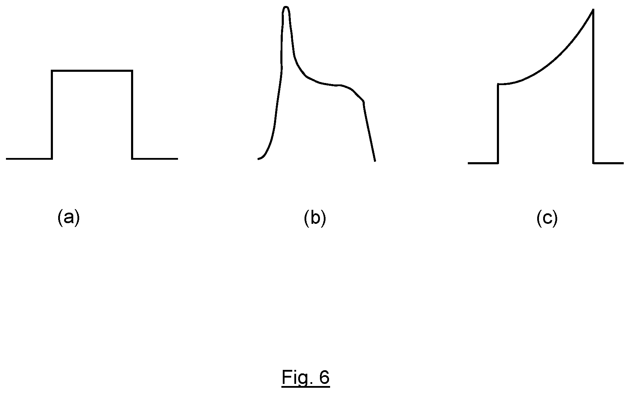

Referring to Figures 5 and 6, an embodiment provides an optical pulse source 400 which further comprises output pulse control apparatus comprising an optical detector 402 and a controller 404.

The optical detector is configured to detect a pulse shape of a laser light pulse output from the optical frequency conversion apparatus 140 and to generate an output signal indicative of the detected pulse shape. The controller comprises interface circuitry 406, a processor 408 and memory 410. The memory comprises instructions 412 executable by the processor whereby the controller is operative as follows. The controller is operative to receive an output signal indicative of a detected pulse shape from the optical detector.

The controller is operative to determine a difference between the detected pulse shape and a target pulse shape. The controller is operative to determine a compensating pulse shape for the first laser light pulses. The compensating pulse shape is configured to at least partly compensate for the difference between the detected pulse shape and the target pulse shape. The compensating pulse shape thus compensates for pulse shape perturbations introduced by the optical amplification apparatus and/or the optical frequency conversion apparatus.

For example, if the target pulse shape is a square pulse as shown in Figure 6(a) and the detected pulse shape is approximately square with an initial peak (i.e. with a pulse shape perturbation), as shown in Figure 6(b), then a compensating pulse generally having the pulse shape shown in Figure 6(c) may be used to compensate for the difference, so that square output pulses are formed in which the pulse perturbation is at least partly compensated for.

The controller is operative to generate at least one drive signal for the optical modulation apparatus, in this example a drive signal for the first optical modulator 220. The drive signal is configured to cause the first optical modulator to apply amplitude modulation to form first laser light pulses having the compensating pulse shape.

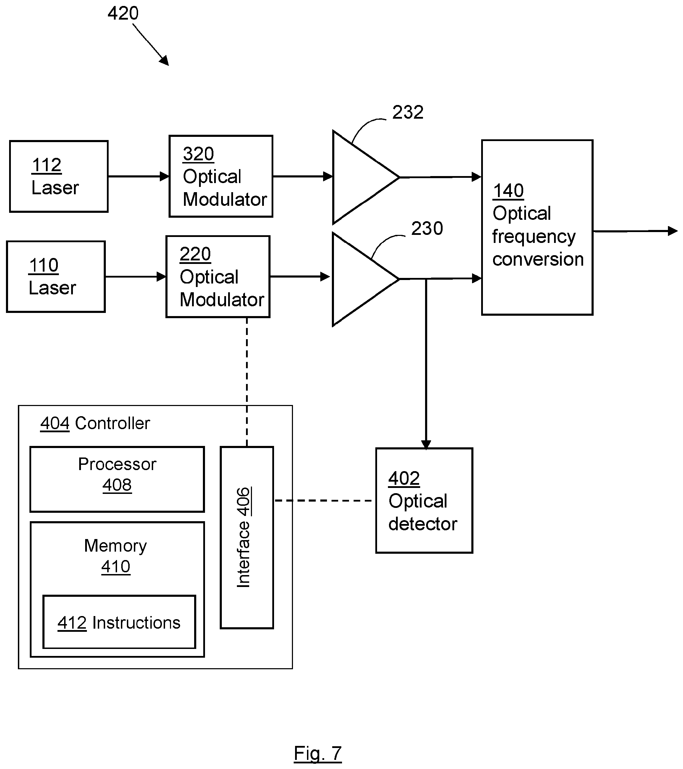

Alternatively, as in the embodiment of the optical pulse source 420 shown in Figure 7, the optical detector is configured to detect a pulse shape of a laser light pulse output from the optical amplification apparatus, for example the laser light pulse output from the first optical amplifier 230.

In an embodiment, the at least one drive signal is further configured to cause the optical modulation apparatus to apply amplitude modulation to form first laser light pulses having a pulse duration of up to 1µs and a pulse repetition rate in the range 0.1kHz to 1MHz.

In an embodiment, the first laser light pulses have a pulse duration of up to 500ns.

In an embodiment, the first laser light pulses have a pulse duration in the range 1ns to 500ns.In an embodiment, the controller is operative to generate a drive signal for the first optical modulator 220 and the second optical modulator 320 to cause the optical modulators to modulate the laser light at the first wavelength and the laser light at the second wavelength respectively to form first laser light pulses and second laser light pulses that are square pulses having a 150ns pulse duration and a pulse repetition rate of 1kHz. Using the same drive signal advantageously means that the first laser light pulses and the second laser light pulses are synchronized.

The first optical amplifier is configured to be continuously pumped to amplify the first laser light pulses to an average power of at least 3mW and the second optical amplifier is configured to be continuously pumped to amplify the second laser light pulses to an average power of at least 3mW. Pumping the optical amplifiers to amplify to an average power of at least 3mw will result in the first laser light pulses and the second laser light pulses being amplified to pulse peak powers of 20W, since 20W x 150ns x 1 kHz = 3mW. The first laser light pulses and the second laser light pulses output from the respective optical amplifiers are therefore 20W peak power, square pulses of 150ns pulse duration and 1kHz pulse repetition rate but the optical amplifiers are only required to be continuously pumped to amplify to a relatively low average power of 3mW.

In an embodiment, the controller 404 is operative to determine a first compensating pulse shape for the first laser light pulses and a second compensating pulse shape for the second laser light pulses. The controller is operative to generate a first drive signal for the first optical modulator 220 and a second drive signal for the second optical modulator 320. The first drive signal is configured to cause the first optical modulator to apply amplitude modulation to form the first laser light pulses having the first compensating pulse shape. The second drive signal is configured to cause the second optical modulator to apply amplitude modulation to form the second laser light pulses having the second compensating pulse shape.

In an embodiment, the target pulse shape is one of a square pulse or a Gaussian pulse.

In an embodiment, the controller 404 is further operative to determine a phase-offset for the first laser light pulses. The controller is additionally operative to generate the at least one drive signal configured to cause the optical modulation apparatus to additionally apply phase modulation to said one of the laser light at the first wavelength or the laser light at the second wavelength to form the first laser light pulses with the phase-offset between subsequent laser light pulses.

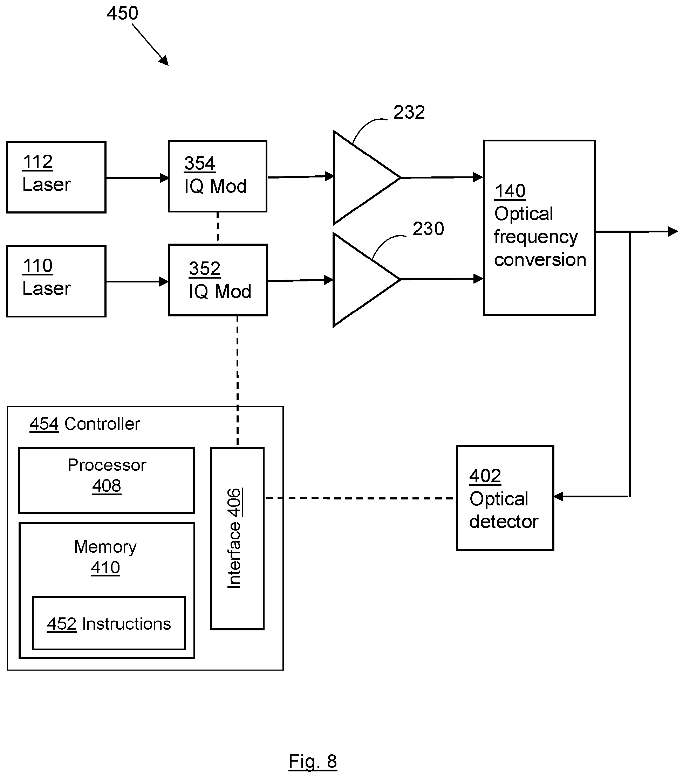

Figure 8 shows an optical pulse source 450 according to an embodiment in which the first optical modulator is further configured to apply phase modulation to the laser light at the first wavelength and the second optical modulator is further configured to apply phase modulation to the laser light at the second wavelength. For example, the first optical modulator is a first IQ modulator 352 and the second optical modulator is a second IQ modulator 354.

The controller 454 of this embodiment is further operative to determine a phase-offset for the first laser light pulses and the second laser light pulses. The controller is operative to generate at least one drive signal configured to cause the first optical modulator to additionally apply phase modulation to the laser light at the first wavelength to form the first laser light pulses with the phase-offset between subsequent first laser light pulses and to cause the second optical modulator to additionally apply phase modulation to the laser light at the second wavelength to form the second laser light pulses with the phase-offset between subsequent second laser light pulses.

Alternatively, the optical detector may be configured to detect a pulse shape of a laser light pulse output from the optical amplification apparatus, for example the laser light pulse output from the first optical amplifier 230.

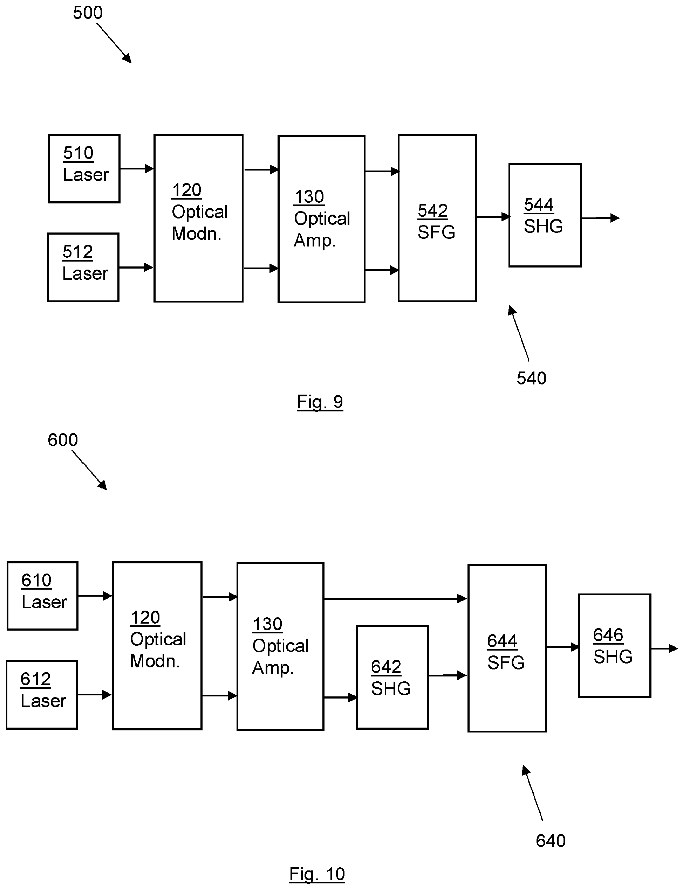

Figure 9 shows an optical pulse source 500 according to an embodiment in which the optical modulation apparatus 540 comprises sum frequency generation, SFG, apparatus 542 and second harmonic generation, SHG, apparatus 544. The SFG apparatus 542 is configured to perform sum frequency generation using the first laser light pulses and the other of the laser light at the first wavelength or the laser light at the second wavelength, to form sum frequency laser light pulses. The SHG apparatus 544 is configured to perform frequency doubling of the sum frequency laser light pulses, to form the output laser light pulses.

In an embodiment, the first laser 510 is configured to output laser light at a first wavelength in a first one of a range 1050nm to 1110nm or a range 1535nm to 1590nm. The second laser 512 is configured to output laser light at second wavelength in a second one of the range 1050nm to 1110nm or the range 1535nm to 1590nm. The output laser light pulses have a wavelength of one of 317nm or 318nm.

In an embodiment, the first laser 510 is configured to output laser light at a first one of 1064nm or 1560nm. The second laser 512 is configured to output laser light at a second one of 1064nm or 1560nm. The output laser light pulses have a wavelength of 317nm.

In an embodiment, the first laser 510 is configured to output laser light at a first one of 1072.8nm or 1550nm. The second laser 512 is configured to output laser light at second one of 1072.8nm or 1550nm. The output laser light pulses have a wavelength of 317nm.

In an embodiment, the first laser 510 is configured to output laser light at a first one of 1078.6nm or 1550nm. The second laser 512 is configured to output laser light at second one of 1078.6nm or 1550nm. The output laser light pulses have a wavelength of 318nm.

Figure 10 shows an optical pulse source 600 according to an embodiment in which the optical frequency conversion apparatus 640 comprises first SHG apparatus 642, SFG apparatus 644 and second SHG apparatus 646. The first SHG apparatus 642 is configured to perform frequency doubling of the first laser light pulses, to form frequency doubled laser light pulses. The SFG apparatus 644 is configured to perform sum frequency generation using the frequency doubled laser light pulses and the other of the laser light at the first wavelength or the laser light at the second wavelength, to form sum frequency laser light pulses. The second SHG apparatus 646 is configured to perform frequency doubling of the sum frequency laser light pulses, to form the output laser light pulses.

In an embodiment, the first laser 610 is configured to output laser light at a first one of 1566nm or 1966nm. The second laser 612 is configured to output laser light at second one of 1566nm or 1966nm. The output laser light pulses have a wavelength of 302nm.

In an embodiment, the first laser 610 is configured to output laser light at a first one of 1559nm or 1970nm. The second laser 612 is configured to output laser light at second one of 1559nm or 1970nm. The output laser light pulses have a wavelength of 302nm.

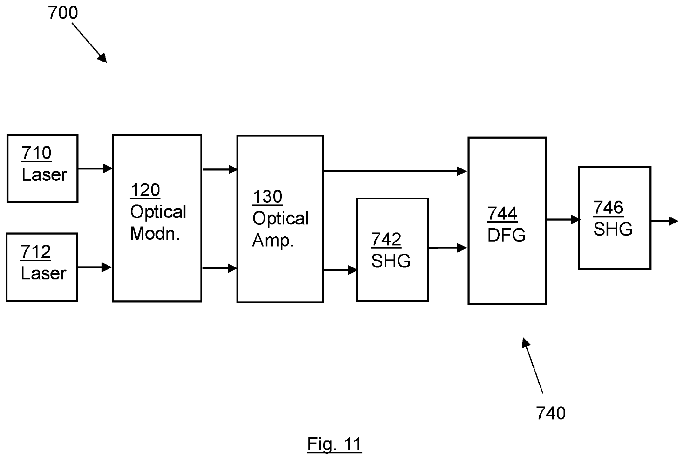

Figure 11 shows an optical pulse source 700 according to an embodiment in which the optical frequency conversion apparatus 740 comprises first SHG apparatus 742, DFG apparatus 744 and second SHG apparatus 746. The first SHG apparatus 742 is configured to perform frequency doubling of the first laser light pulses, to form frequency doubled laser light pulses. The DFG apparatus 744 is configured to perform difference frequency generation using the frequency doubled laser light pulses and the other of the laser light at the first wavelength or the laser light at the second wavelength, to form difference frequency laser light pulses. The second SHG apparatus 746 is configured to perform frequency doubling of the difference frequency laser light pulses, to form the output laser light pulses.

In an embodiment, the first laser 710 is configured to output laser light at a first one of 1560nm or 1092nm. The second laser 712 is configured to output laser light at second one of 1560nm or 1092nm. The output laser light pulses have a wavelength of 420nm.

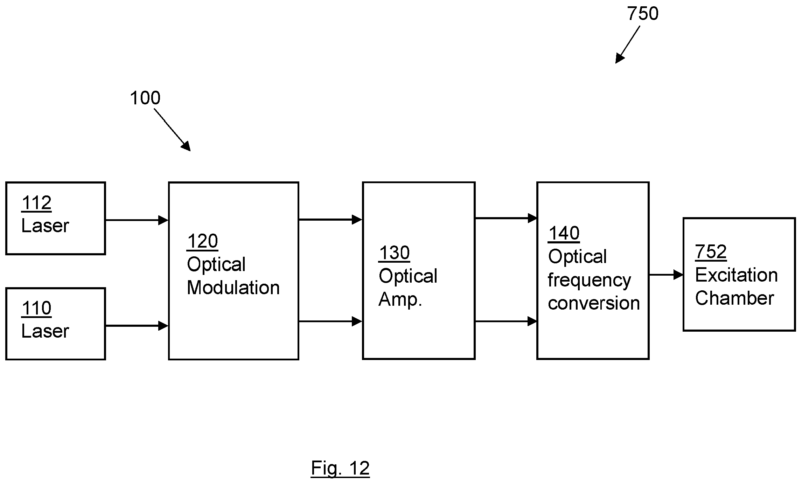

Figure 12illustrates an optical system 750 for Rydberg excitation comprising an optical pulse source 100 as described above and an excitation chamber 752.

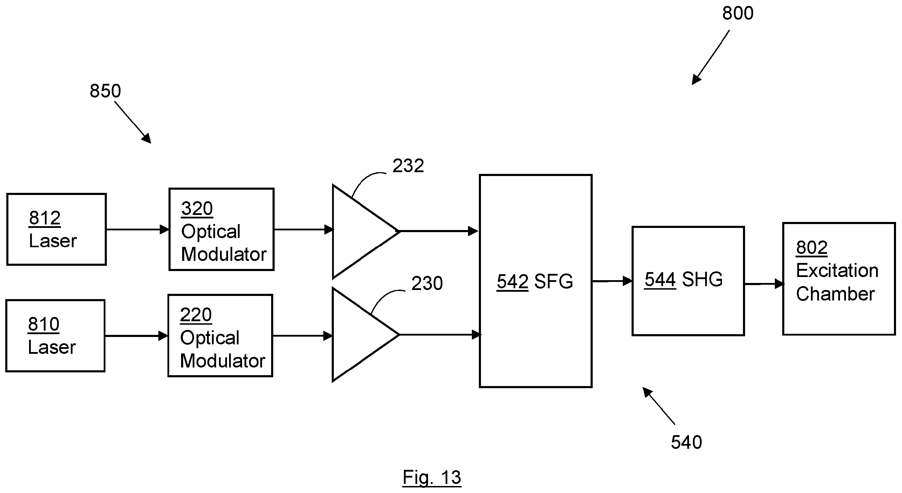

Referring to Figure 13, an embodiment provides an optical system 800 for Rydberg excitation. The optical system 800 comprises an optical pulse source 850 and an excitation chamber 802.

The optical pulse source 850 comprises a first laser 810, a second laser 812, optical modulation apparatus 220, 320, optical amplification apparatus 230, 232 and optical frequency conversion apparatus 540.

The first laser 810 is configured to output laser light at a first wavelength. The second laser 812 is configured to output laser light at a second wavelength, different to the first wavelength.

The optical modulation apparatus comprises a first optical modulator 220 and a second optical modulator 320. The first optical modulator 220 is configured to apply amplitude modulation to the laser light at the first wavelength to form first laser light pulses at the first wavelength. The second optical modulator 320 is configured to apply amplitude modulation to the laser light at the second wavelength to form second laser light pulses at the second wavelength.

The optical amplification apparatus comprises a first optical amplifier 230 configured to amplify the first laser light pulses and a second optical amplifier 232 configured to amplify the second laser light pulses.

The optical frequency conversion apparatus 540 is configured to perform optical frequency conversion using the first laser light pulses and the second laser light pulses to form output laser light pulses at a third wavelength. The third wavelength is shorter than the first wavelength and the second wavelength. The optical frequency conversion apparatus 540 comprises sum frequency generation, SFG, apparatus 542 and second harmonic generation, SHG, apparatus 544. The SFG apparatus 542 is configured to perform sum frequency generation using the first laser light pulses and the other of the laser light at the first wavelength or the laser light at the second wavelength, to form sum frequency laser light pulses. The SHG apparatus 544 is configured to perform frequency doubling of the sum frequency laser light pulses, to form the output laser light pulses.

In an embodiment, the first laser 810 is configured to output laser light at a first wavelength in a first one of a range 1050nm to 1110nm or a range 1535nm to 1590nm. The second laser 812 is configured to output laser light at second wavelength in a second one of the range 1050nm to 1110nm or the range 1535nm to 1590nm. The output laser light pulses have a wavelength of one of 317nm or 318nm.

In an embodiment, the first laser 810 is configured to output laser light at a first one of 1064nm or 1560nm. The second laser 812 is configured to output laser light at second one of 1064nm or 1560nm. The output laser light pulses have a wavelength of 317nm. The optical system 800 of this embodiment may therefore be used for Rydberg excitation of Strontium, Sr, atoms.

In an embodiment, the first laser 810 is configured to output laser light at a first one of 1072.8nm or 1550nm. The second laser 812 is configured to output laser light at second one of 1072.8nm or 1550nm. The output laser light pulses have a wavelength of 317nm. The optical system 800 of this embodiment may therefore be used for Rydberg excitation of Strontium, Sr, atoms.

In an embodiment, the first laser 810 is configured to output laser light at a first one of 1078.6nm or 1550nm. The second laser 812 is configured to output laser light at second one of 1078.6nm or 1550nm. The output laser light pulses have a wavelength of 318nm. The optical system 800 of this embodiment may therefore be used for Rydberg excitation of Caesium, Cs, atoms.

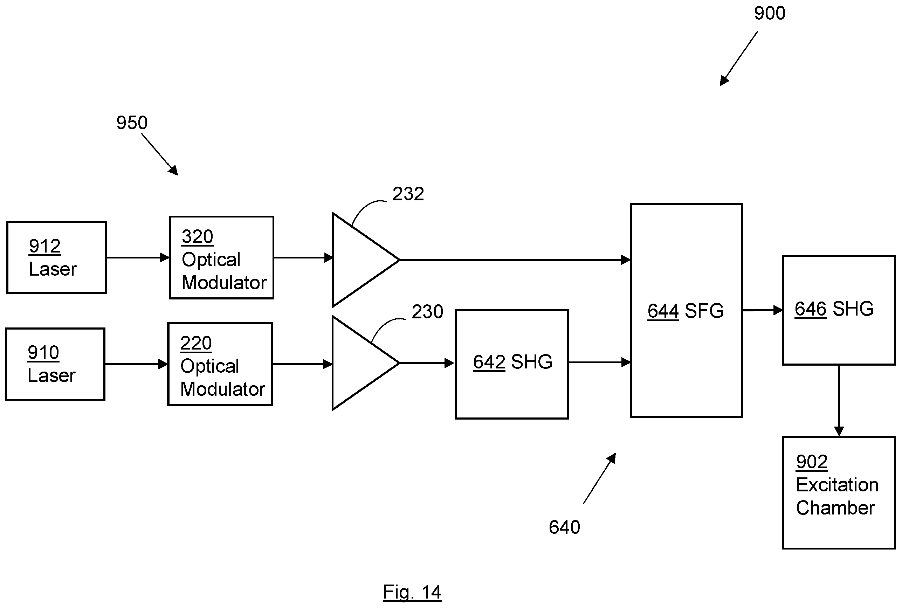

Referring to Figure 14, an embodiment provides an optical system 900 for Rydberg excitation. The optical system 900 comprises an optical pulse source 950 and an excitation chamber 902.

The optical pulse source 950 comprises a first laser 910, a second laser 912, optical modulation apparatus 220, 320, optical amplification apparatus 230, 232 and optical frequency conversion apparatus 640.

The optical modulation apparatus and the optical amplification apparatus are as described above with reference to Figure 13.

The optical frequency conversion apparatus 640 is configured to perform optical frequency conversion using the first laser light pulses and the second laser light pulses to form output laser light pulses at a third wavelength. The third wavelength is shorter than the first wavelength and the second wavelength. The optical frequency conversion apparatus 640 comprises first SHG apparatus 642, SFG apparatus 644 and second SHG apparatus 646. The first SHG apparatus 642 is configured to perform frequency doubling of the first laser light pulses, to form frequency doubled laser light pulses. The SFG apparatus 644 is configured to perform sum frequency generation using the frequency doubled laser light pulses and the other of the laser light at the first wavelength or the laser light at the second wavelength, to form sum frequency laser light pulses. The second SHG apparatus 646 is configured to perform frequency doubling of the sum frequency laser light pulses, to form the output laser light pulses.

In an embodiment, the first laser 910 is configured to output laser light at a first one of 1566nm or 1966nm. The second laser 912 is configured to output laser light at second one of 1566nm or 1966nm. The output laser light pulses have a wavelength of 302nm. The optical system 900 of this embodiment may therefore be used for Rydberg excitation of Ytterbium, Yb, atoms.

In an embodiment, the first laser 910 is configured to output laser light at a first one of 1559nm or 1970nm. The second laser 912 is configured to output laser light at second one of 1559nm or 1970nm. The output laser light pulses have a wavelength of 302nm. The optical system 900 of this embodiment may therefore be used for Rydberg excitation of Ytterbium, Yb, atoms.

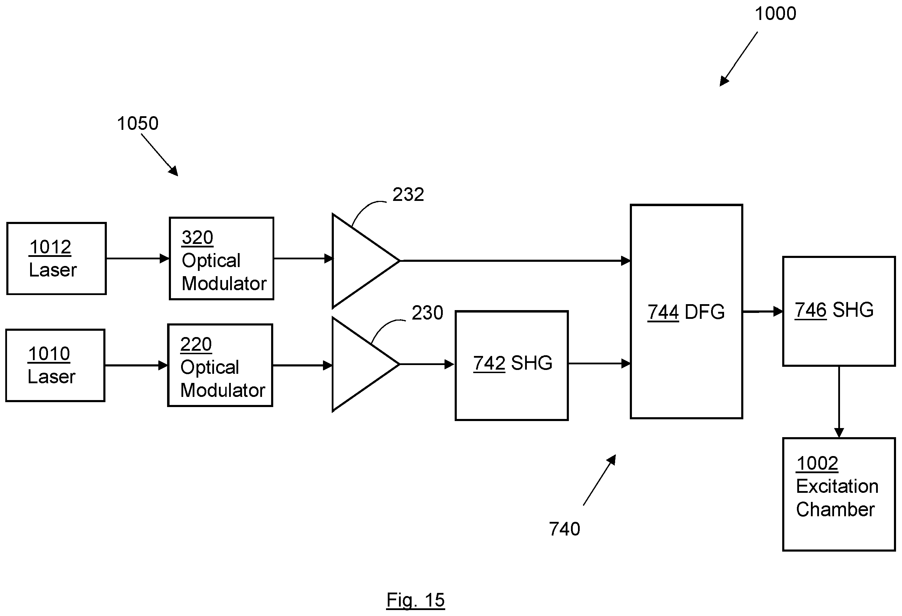

Referring to Figure 15, an embodiment provides an optical system 1000 for Rydberg excitation. The optical system 1000 comprises an optical pulse source 1050 and an excitation chamber 1002.

The optical pulse source 1050 comprises a first laser 1010, a second laser 1012, optical modulation apparatus 220, 320, optical amplification apparatus 230, 232 and optical frequency conversion apparatus 640.

The optical modulation apparatus and the optical amplification apparatus are as described above with reference to Figure 13.

The optical frequency conversion apparatus 740 is configured to perform optical frequency conversion using the first laser light pulses and the second laser light pulses to form output laser light pulses at a third wavelength. The third wavelength is shorter than the first wavelength and the second wavelength. The optical frequency conversion apparatus 740 comprises first SHG apparatus 742, DFG apparatus 744 and second SHG apparatus 746. The first SHG apparatus 742 is configured to perform frequency doubling of the first laser light pulses, to form frequency doubled laser light pulses. The DFG apparatus 744 is configured to perform difference frequency generation using the frequency doubled laser light pulses and the other of the laser light at the first wavelength or the laser light at the second wavelength, to form difference frequency laser light pulses. The second SHG apparatus 746 is configured to perform frequency doubling of the difference frequency laser light pulses, to form the output laser light pulses.

In an embodiment, the first laser 1010 is configured to output laser light at a first one of 1560nm or 1092nm. The second laser 1012 is configured to output laser light at second one of 1560nm or 1092nm. The output laser light pulses have a wavelength of 420nm. The optical system 1000 of this embodiment may therefore be used for Rydberg excitation of Rubidium, Rb, atoms.

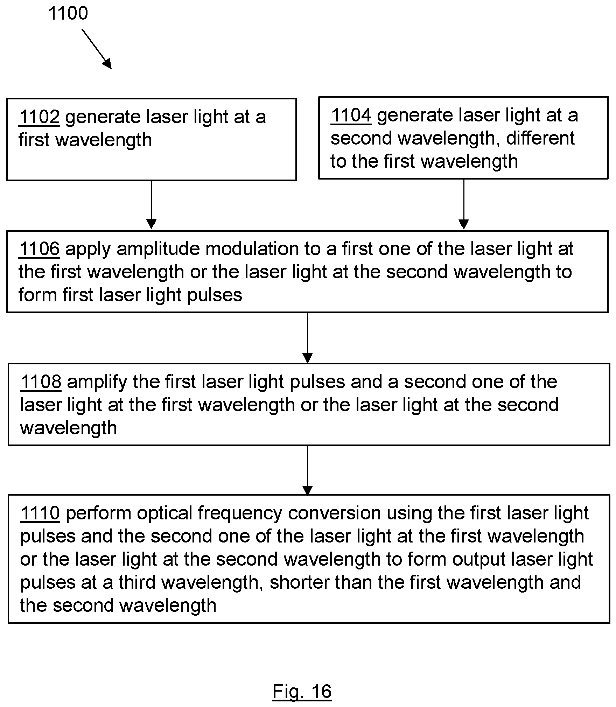

Figure 16 illustrates an example method 1100 of generating laser light pulses. The method comprises generating 1102 laser light at a first wavelength and generating 1104 laser light at a second wavelength, different to the first wavelength. Then applying 1106 amplitude modulation to a first one of the laser light at the first wavelength or the laser light at the second wavelength to form first laser light pulses. The method further comprises amplifying 1108 the first laser light pulses and a second one of the laser light at the first wavelength or the laser light at the second wavelength. Then performing 1110 optical frequency conversion using the first laser light pulses and the second one of the laser light at the first wavelength or the laser light at the second wavelength to form output laser light pulses at a third wavelength, shorter than the first wavelength and the second wavelength.

## Claims

1. An optical pulse source (300, 350, 400, 450, 850, 950, 1050) configured to provide output laser light pulses at a wavelength of 302 nm or 317 nm or 318 nm or 420 nm for Rydberg excitation of Ytterbium, Strontium, or Rubidium atoms, the optical pulse source comprising:
a first laser (110, 510, 610, 710, 810, 910, 1010) configured to output laser light at a first wavelength;
a second laser (112, 512, 612, 712, 812, 912, 1012) configured to output laser light at a second wavelength, different to the first wavelength;
optical modulation apparatus (220, 320, 352, 354) comprising a first optical modulator (220, 352) configured to apply amplitude modulation to the laser light at the first wavelength to form first laser light pulses and a second optical modulator (320, 354) configured to apply amplitude modulation to the laser light at the second wavelength to form second laser light pulses, wherein the optical modulation apparatus is further configured to apply phase modulation to the laser light at the first wavelength and/or the laser light at the second wavelength;
optical amplification apparatus (230, 232) comprising a first optical amplifier (230) configured to amplify the first laser light pulses and a second optical amplifier (232) configured to amplify the second laser light pulses; and
optical frequency conversion apparatus (140, 540, 640, 740) configured to perform optical frequency conversion using the first and second laser light pulses to form output laser light pulses at a third wavelength, shorter than the first wavelength and the second wavelength.

2. The optical pulse source of claim 1, wherein the optical amplification apparatus is configured to be continuously pumped.

3. The optical pulse source of any one of claims 1 to 2, further comprising output pulse control apparatus comprising an optical detector (402) configured to detect a pulse shape of a laser light pulse and to generate an output signal indicative of the detected pulse shape; and
a controller (404, 454) comprising interface circuitry (406), at least one processor (408) and memory (410) comprising instructions (412, 452) executable by said processor whereby the controller is operative to:
- receive an output signal indicative of a detected pulse shape from the optical detector;
- determine a difference between the detected pulse shape and a target pulse shape;
- determine a compensating pulse shape for the first laser light pulses, the compensating pulse shape configured to at least partly compensate for said difference; and
- generate at least one drive signal for the optical modulation apparatus, the at least one drive signal configured to cause the optical modulation apparatus to apply amplitude modulation to form first laser light pulses having the compensating pulse shape.

4. The optical pulse source of claim 3, wherein the controller (404, 454) is operative to determine at least one of a first compensating pulse shape for the first laser light pulses or a second compensating pulse shape for the second laser light pulses, and wherein the at least one drive signal is configured to cause at least one of the first optical modulator to apply amplitude modulation to form the first laser light pulses having the first compensating pulse shape or the second optical modulator to apply amplitude modulation to form the second laser light pulses having the second compensating pulse shape.

5. The optical pulse source of any one of claim 3 and claim 4, wherein the target pulse shape is one of a square pulse or a Gaussian pulse.

6. The optical pulse source of any one of claims 3 to 5, wherein the at least one drive signal is further configured to cause the optical modulation apparatus to apply amplitude modulation to form first laser light pulses having a pulse duration of up to 1 µs, such as up to 500ns, such as in the range 1ns to 500ns, and a pulse repetition rate in a range 0.1kHz to 1MHz.

7. The optical pulse source of any one of claims 1 to 6, wherein the controller (454) is further operative to determine a phase-offset for the first laser light pulses and to generate the at least one drive signal configured to cause the optical modulation apparatus to additionally apply phase modulation to said one of the laser light at the first wavelength or the laser light at the second wavelength to form the first laser light pulses with the phase-offset between subsequent laser light pulses.

8. The optical pulse source of claim 7, wherein the first optical modulator (352) is further configured to apply phase modulation to the laser light at the first wavelength and the second optical modulator (354) is further configured to apply phase modulation to the laser light at the second wavelength, and wherein the controller (454) is further operative to determine a phase-offset for the first laser light pulses and the second laser light pulses and to generate the at least one drive signal configured to cause the first optical modulator to additionally apply phase modulation to the laser light at the first wavelength to form the first laser light pulses with the phase-offset between subsequent first laser light pulses and to cause the second optical modulator to additionally apply phase modulation to the laser light at the second wavelength to form the second laser light pulses with the phase-offset between subsequent second laser light pulses.

9. The optical pulse source of any one of claims 1 to 8, wherein the optical frequency conversion apparatus (140, 540, 640, 740) is configured to perform the optical frequency conversion by second harmonic generation, SHG, and one of sum frequency generation, SFG, or difference frequency generation, DFG.

10. The optical pulse source of claim 9, wherein the optical frequency conversion apparatus (140, 540) comprises:
SFG apparatus (542) configured to perform sum frequency generation using the first laser light pulses and the laser light at the second wavelength, to form sum frequency laser light pulses; and
SHG apparatus (544) configured to perform frequency doubling of the sum frequency laser light pulses, to form the output laser light pulses.

11. The optical pulse source of claim 9, wherein the optical frequency conversion apparatus (140, 640) comprises:
first SHG apparatus (642) configured to perform frequency doubling of the first laser light pulses, to form frequency doubled laser light pulses;
SFG apparatus (644) configured to perform sum frequency generation using the frequency doubled laser light pulses and the laser light at the second wavelength, to form sum frequency laser light pulses; and
second SHG apparatus (646) configured to perform frequency doubling of the sum frequency laser light pulses, to form the output laser light pulses.

12. The optical pulse source of claim 9, wherein the optical frequency conversion apparatus (140, 740) comprises:
first SHG apparatus (742) configured to perform frequency doubling of the first laser light pulses, to form frequency doubled laser light pulses;
DFG apparatus (744) configured to perform difference frequency generation using the frequency doubled laser light pulses and the laser light at the second wavelength, to form difference frequency laser light pulses; and
second SHG apparatus (746) configured to perform frequency doubling of the difference frequency laser light pulses, to form the output laser light pulses.

13. An optical system (750, 800, 900, 1000) for Rydberg excitation, the optical system comprising an optical pulse source (300, 350, 400, 450, 500, 600, 700, 850, 950, 1050) as claimed in any one of claims 1 to 12 and an excitation chamber (752, 802, 902, 1002).

## Patentansprüche

1. Quelle optischer Pulse (300, 350, 400, 450, 850, 950, 1050), die dazu ausgelegt ist, Ausgangslaserlichtpulse bei einer Wellenlänge von 302 nm oder 317 nm oder 318 nm oder 420 nm für die Rydberg-Anregung von Ytterbium-, Strontium- oder Rubidiumatomen bereitzustellen, wobei die Quelle optischer Pulse umfasst:
einen ersten Laser (110, 510, 610, 710, 810, 910, 1010), der dazu ausgelegt ist, Laserlicht bei einer ersten Wellenlänge auszugeben;
einen zweiten Laser (112, 512, 612, 712, 812, 912, 1012), der dazu ausgelegt ist, Laserlicht bei einer zweiten Wellenlänge auszugeben, die sich von der ersten Wellenlänge unterscheidet;
eine Vorrichtung zur optischen Modulation (220, 320, 352, 354), umfassend einen ersten optischen Modulator (220, 352), der dazu ausgelegt ist, eine Amplitudenmodulation auf das Laserlicht bei der ersten Wellenlänge anzuwenden, um erste Laserlichtpulse zu bilden, und einen zweiten optischen Modulator (320, 354), der dazu ausgelegt ist, eine Amplitudenmodulation auf das Laserlicht bei der zweiten Wellenlänge anzuwenden, um zweite Laserlichtpulse zu bilden, wobei die Vorrichtung zur optischen Modulation ferner dazu ausgelegt ist, eine Phasenmodulation auf das Laserlicht bei der ersten Wellenlänge und/oder das Laserlicht bei der zweiten Wellenlänge anzuwenden;
eine Vorrichtung zur optischen Verstärkung (230, 232), umfassend einen ersten optischen Verstärker (230), der dazu ausgelegt ist, die ersten Laserlichtpulse zu verstärken, und einen zweiten optischen Verstärker (232), der dazu ausgelegt ist, die zweiten Laserlichtpulse zu verstärken; und
eine Vorrichtung zur optischen Frequenzumwandlung (140, 540, 640, 740), die dazu ausgelegt ist, unter Verwendung der ersten und zweiten Laserlichtpulse eine optische Frequenzumwandlung durchzuführen, um Ausgangslaserlichtpulse bei einer dritten Wellenlänge zu bilden, die kürzer als die erste Wellenlänge und die zweite Wellenlänge ist.

2. Quelle optischer Pulse nach Anspruch 1, wobei die Vorrichtung zur optischen Verstärkung dazu ausgelegt ist, im Dauerstrich gepumpt zu werden.

3. Quelle optischer Pulse nach einem der Ansprüche 1 bis 2, ferner umfassend eine Vorrichtung zur Ausgangspulssteuerung, die einen optischen Detektor (402) umfasst, der dazu ausgelegt ist, eine Pulsform eines Laserlichtpulses zu erfassen und ein Ausgangssignal zu generieren, das die erfasste Pulsform anzeigt; und
eine Steuereinheit (404, 454), die eine Schnittstellenschaltung (406), mindestens einen Prozessor (408) und einen Speicher (410) umfasst, der durch den Prozessor ausführbare Anweisungen (412, 452) umfasst, wobei die Steuereinheit dazu betreibbar ist:
- Empfangen eines Ausgangssignals, das eine erfasste Pulsform von dem optischen Detektor anzeigt;
- Bestimmen einer Differenz zwischen der erfassten Pulsform und einer Zielpulsform;
- Bestimmen einer kompensierenden Pulsform für die ersten Laserlichtpulse, wobei die kompensierende Pulsform dazu ausgelegt ist, die Differenz zumindest teilweise zu kompensieren; und
- Erzeugen mindestens eines Ansteuersignals für die Vorrichtung zur optischen Modulation, wobei das mindestens eine Ansteuersignal dazu ausgelegt ist, die Vorrichtung zur optischen Modulation zu veranlassen, eine Amplitudenmodulation anzuwenden, um erste Laserlichtpulse mit der kompensierenden Pulsform zu bilden.

4. Quelle optischer Pulse nach Anspruch 3, wobei die Steuereinheit (404, 454) dazu betreibbar ist, mindestens eine von einer ersten kompensierenden Pulsform für die ersten Laserlichtpulse oder einer zweiten kompensierenden Pulsform für die zweiten Laserlichtpulse zu bestimmen, und wobei das mindestens eine Ansteuersignal dazu ausgelegt ist, mindestens einen von dem ersten optischen Modulator zu veranlassen, eine Amplitudenmodulation anzuwenden, um die ersten Laserlichtpulse mit der ersten kompensierenden Pulsform zu bilden, oder den zweiten optischen Modulator, eine Amplitudenmodulation anzuwenden, um die zweiten Laserlichtpulse mit der zweiten kompensierenden Pulsform zu bilden.

5. Quelle optischer Pulse nach einem vom Anspruch 3 oder Anspruch 4, wobei die Zielpulsform eine von einer Rechteckpulsform oder einer Gaußscher-Puls-Form ist.

6. Quelle optischer Pulse nach einem der Ansprüche 3 bis 5, wobei das mindestens eine Ansteuersignal ferner dazu ausgelegt ist, die Vorrichtung zur optischen Modulation zu veranlassen, eine Amplitudenmodulation anzuwenden, um erste Laserlichtpulse mit einer Pulsdauer von bis zu 1 µs, wie beispielsweise bis zu 500 ns, wie beispielsweise im Bereich von 1 ns bis 500 ns, und einer Pulswiederholrate im Bereich von 0,1 kHz bis 1 MHz zu bilden.

7. Quelle optischer Pulse nach einem der Ansprüche 1 bis 6, wobei die Steuereinheit (454) ferner dazu betreibbar ist, einen Phasenversatz für die ersten Laserlichtpulse zu bestimmen und das mindestens eine Ansteuersignal zu generieren, das dazu ausgelegt ist, die Vorrichtung zur optischen Modulation zu veranlassen, zusätzlich eine Phasenmodulation auf das eine von dem Laserlicht bei der ersten Wellenlänge oder dem Laserlicht bei der zweiten Wellenlänge anzuwenden, um die ersten Laserlichtpulse mit dem Phasenversatz zwischen nachfolgenden Laserlichtpulsen zu bilden.

8. Quelle optischer Pulse nach Anspruch 7, wobei der erste optische Modulator (352) ferner dazu ausgelegt ist, eine Phasenmodulation auf das Laserlicht bei der ersten Wellenlänge anzuwenden, und der zweite optische Modulator (354) ferner dazu ausgelegt ist, eine Phasenmodulation auf das Laserlicht bei der zweiten Wellenlänge anzuwenden, und wobei die Steuereinheit (454) ferner dazu betreibbar ist, einen Phasenversatz für die ersten Laserlichtpulse und die zweiten Laserlichtpulse zu bestimmen und das mindestens eine Ansteuersignal zu generieren, das dazu ausgelegt ist, den ersten optischen Modulator zu veranlassen, zusätzlich eine Phasenmodulation auf das Laserlicht bei der ersten Wellenlänge anzuwenden, um die ersten Laserlichtpulse mit dem Phasenversatz zwischen nachfolgenden ersten Laserlichtpulsen zu bilden, und den zweiten optischen Modulator zu veranlassen, zusätzlich eine Phasenmodulation auf das Laserlicht bei der zweiten Wellenlänge anzuwenden, um die zweiten Laserlichtpulse mit dem Phasenversatz zwischen nachfolgenden zweiten Laserlichtpulsen zu bilden.

9. Quelle optischer Pulse nach einem der Ansprüche 1 bis 8, wobei die Vorrichtung zur optischen Frequenzumwandlung (140, 540, 640, 740) dazu ausgelegt ist, die optische Frequenzumwandlung durch Erzeugung der zweiten Harmonischen, SHG, und eine von Summenfrequenzerzeugung, SFG, oder Differenzfrequenzerzeugung, DFG, durchzuführen.

10. Quelle optischer Pulse nach Anspruch 9, wobei die Vorrichtung zur optischen Frequenzumwandlung (140, 540) umfasst:
eine SFG-Vorrichtung (542), die dazu ausgelegt ist, unter Verwendung der ersten Laserlichtpulse und des Laserlichts bei der zweiten Wellenlänge eine Summenfrequenzerzeugung durchzuführen, um Summenfrequenz-Laserlichtpulse zu bilden; und eine SHG-Vorrichtung (544), die dazu ausgelegt ist, eine Frequenzverdopplung der Summenfrequenz-Laserlichtpulse durchzuführen, um die Ausgangslaserlichtpulse zu bilden.

11. Quelle optischer Pulse nach Anspruch 9, wobei die Vorrichtung zur optischen Frequenzumwandlung (140, 640) umfasst:
eine erste SHG-Vorrichtung (642), die dazu ausgelegt ist, eine Frequenzverdopplung der ersten Laserlichtpulse durchzuführen, um frequenzverdoppelte Laserlichtpulse zu bilden;
eine SFG-Vorrichtung (644), die dazu ausgelegt ist, unter Verwendung der frequenzverdoppelten Laserlichtpulse und des Laserlichts bei der zweiten Wellenlänge eine Summenfrequenzerzeugung durchzuführen, um Summenfrequenz-Laserlichtpulse zu bilden; und
eine zweite SHG-Vorrichtung (646), die dazu ausgelegt ist, eine Frequenzverdopplung der Summenfrequenz-Laserlichtpulse durchzuführen, um die Ausgangslaserlichtpulse zu bilden.

12. Quelle optischer Pulse nach Anspruch 9, wobei die Vorrichtung zur optischen Frequenzumwandlung (140, 740) umfasst:
eine erste SHG-Vorrichtung (742), die dazu ausgelegt ist, eine Frequenzverdopplung der ersten Laserlichtpulse durchzuführen, um frequenzverdoppelte Laserlichtpulse zu bilden;
eine DFG-Vorrichtung (744), die dazu ausgelegt ist, unter Verwendung der frequenzverdoppelten Laserlichtpulse und des Laserlichts bei der zweiten Wellenlänge eine Differenzfrequenzerzeugung durchzuführen, um Differenzfrequenz-Laserlichtpulse zu bilden; und
eine zweite SHG-Vorrichtung (746), die dazu ausgelegt ist, eine Frequenzverdopplung der Differenzfrequenz-Laserlichtpulse durchzuführen, um die Ausgangslaserlichtpulse zu bilden.

13. Optisches System (750, 800, 900, 1000) zur Rydberg-Anregung, wobei das optische System eine optische Pulsquelle (300, 350, 400, 450, 500, 600, 700, 850, 950, 1050) nach einem der Ansprüche 1 bis 12 und eine Anregungskammer (752, 802, 902, 1002) umfasst.

## Revendications

1. Source d'impulsions optiques (300, 350, 400, 450, 850, 950, 1050) configurée pour fournir des impulsions de lumière laser de sortie à une longueur d'onde de 302 nm ou 317 nm ou 318 nm ou 420 nm pour une excitation de Rydberg d'atomes d'ytterbium, de strontium ou de rubidium, la source d'impulsions optiques comprenant :
un premier laser (110, 510, 610, 710, 810, 910, 1010) configuré pour émettre en sortie de la lumière laser à une première longueur d'onde ;
un second laser (112, 512, 612, 712, 812, 912, 1012) configuré pour émettre en sortie de la lumière laser à une seconde longueur d'onde, différente de la première longueur d'onde ;
un appareil de modulation optique (220, 320, 352, 354) comprenant un premier modulateur optique (220, 352) configuré pour appliquer une modulation d'amplitude à la lumière laser à la première longueur d'onde afin de former des premières impulsions de lumière laser et un second modulateur optique (320, 354) configuré pour appliquer une modulation d'amplitude à la lumière laser à la seconde longueur d'onde afin de former des secondes impulsions de lumière laser, dans laquelle l'appareil de modulation optique est en outre configuré pour appliquer une modulation de phase à la lumière laser à la première longueur d'onde et/ou à la lumière laser à la seconde longueur d'onde ;
un appareil d'amplification optique (230, 232) comprenant un premier amplificateur optique (230) configuré pour amplifier les premières impulsions de lumière laser et un second amplificateur optique (232) configuré pour amplifier les secondes impulsions de lumière laser ; et
un appareil de conversion de fréquence optique (140, 540, 640, 740) configuré pour effectuer une conversion de fréquence optique en utilisant les premières et secondes impulsions de lumière laser afin de former des impulsions de lumière laser de sortie à une troisième longueur d'onde, plus courte que la première longueur d'onde et la seconde longueur d'onde.

2. Source d'impulsions optiques selon la revendication 1, dans laquelle l'appareil d'amplification optique est configuré pour être pompé en continu.

3. Source d'impulsions optiques selon l'une quelconque des revendications 1 à 2, comprenant en outre un appareil de commande d'impulsions de sortie comprenant un détecteur optique (402) configuré pour détecter une forme d'impulsion d'une impulsion de lumière laser et pour générer un signal de sortie indicatif de la forme d'impulsion détectée ; et
un dispositif de commande (404, 454) comprenant une circuiterie d'interface (406), au moins un processeur (408) et une mémoire (410) comprenant des instructions (412, 452) exécutables par ledit processeur grâce auxquelles le dispositif de commande est agencé pour :
- recevoir un signal de sortie indicatif d'une forme d'impulsion détectée à partir du détecteur optique ;
- déterminer une différence entre la forme d'impulsion détectée et une forme d'impulsion cible ;
- déterminer une forme d'impulsion de compensation pour les premières impulsions de lumière laser, la forme d'impulsion de compensation étant configurée pour compenser au moins partiellement ladite différence ; et
- générer au moins un signal de commande pour l'appareil de modulation optique, ledit au moins un signal de commande étant configuré pour amener l'appareil de modulation optique à appliquer une modulation d'amplitude afin de former des premières impulsions de lumière laser présentant la forme d'impulsion de compensation.

4. Source d'impulsions optiques selon la revendication 3, dans laquelle le dispositif de commande (404, 454) est agencé pour déterminer au moins une parmi une première forme d'impulsion de compensation pour les premières impulsions de lumière laser ou une seconde forme d'impulsion de compensation pour les secondes impulsions de lumière laser, et dans laquelle ledit au moins un signal de commande est configuré pour amener au moins un parmi le premier modulateur optique à appliquer une modulation d'amplitude afin de former les premières impulsions de lumière laser présentant la première forme d'impulsion de compensation ou le second modulateur optique à appliquer une modulation d'amplitude afin de former les secondes impulsions de lumière laser présentant la seconde forme d'impulsion de compensation.

5. Source d'impulsions optiques selon l'une quelconque de la revendication 3 et de la revendication 4, dans laquelle la forme d'impulsion cible est une parmi une impulsion carrée ou une impulsion gaussienne.

6. Source d'impulsions optiques selon l'une quelconque des revendications 3 à 5, dans laquelle ledit au moins un signal de commande est en outre configuré pour amener l'appareil de modulation optique à appliquer une modulation d'amplitude afin de former des premières impulsions de lumière laser ayant une durée d'impulsion allant jusqu'à 1 µs, par exemple jusqu'à 500 ns, par exemple dans la plage de 1 ns à 500 ns, et un taux de répétition d'impulsions dans une plage de 0,1 kHz à 1 MHz.

7. Source d'impulsions optiques selon l'une quelconque des revendications 1 à 6, dans laquelle le dispositif de commande (454) est en outre agencé pour déterminer un déphasage pour les premières impulsions de lumière laser et pour générer ledit au moins un signal de commande configuré pour amener l'appareil de modulation optique à appliquer en outre une modulation de phase à ladite une parmi la lumière laser à la première longueur d'onde ou la lumière laser à la seconde longueur d'onde afin de former les premières impulsions de lumière laser avec le déphasage entre des impulsions de lumière laser successives.

8. Source d'impulsions optiques selon la revendication 7, dans laquelle le premier modulateur optique (352) est en outre configuré pour appliquer une modulation de phase à la lumière laser à la première longueur d'onde et le second modulateur optique (354) est en outre configuré pour appliquer une modulation de phase à la lumière laser à la seconde longueur d'onde, et dans laquelle le dispositif de commande (454) est en outre agencé pour déterminer un déphasage pour les premières impulsions de lumière laser et les secondes impulsions de lumière laser et pour générer ledit au moins un signal de commande configuré pour amener le premier modulateur optique à appliquer en outre une modulation de phase à la lumière laser à la première longueur d'onde afin de former les premières impulsions de lumière laser avec le déphasage entre des premières impulsions de lumière laser successives et pour amener le second modulateur optique à appliquer en outre une modulation de phase à la lumière laser à la seconde longueur d'onde afin de former les secondes impulsions de lumière laser avec le déphasage entre des secondes impulsions de lumière laser successives.

9. Source d'impulsions optiques selon l'une quelconque des revendications 1 à 8, dans laquelle l'appareil de conversion de fréquence optique (140, 540, 640, 740) est configuré pour effectuer la conversion de fréquence optique par génération de seconde harmonique, SHG, et une parmi une génération de fréquence somme, SFG, ou une génération de fréquence différence, DFG.

10. Source d'impulsions optiques selon la revendication 9, dans laquelle l'appareil de conversion de fréquence optique (140, 540) comprend :
un appareil de SFG (542) configuré pour effectuer une génération de fréquence somme en utilisant les premières impulsions de lumière laser et la lumière laser à la seconde longueur d'onde,
afin de former des impulsions de lumière laser de fréquence somme ; et
un appareil de SHG (544) configuré pour effectuer un doublement de fréquence des impulsions de lumière laser de fréquence somme,
afin de former les impulsions de lumière laser de sortie.

11. Source d'impulsions optiques selon la revendication 9, dans laquelle l'appareil de conversion de fréquence optique (140, 640) comprend :
un premier appareil de SHG (642) configuré pour effectuer un doublement de fréquence des premières impulsions de lumière laser, afin de former des impulsions de lumière laser à fréquence doublée ;
un appareil de SFG (644) configuré pour effectuer une génération de fréquence somme en utilisant les impulsions de lumière laser à fréquence doublée et la lumière laser à la seconde longueur d'onde, afin de former des impulsions de lumière laser de fréquence somme ; et
un second appareil de SHG (646) configuré pour effectuer un doublement de fréquence des impulsions de lumière laser de fréquence somme, afin de former les impulsions de lumière laser de sortie.

12. Source d'impulsions optiques selon la revendication 9, dans laquelle l'appareil de conversion de fréquence optique (140, 740) comprend :
un premier appareil de SHG (742) configuré pour effectuer un doublement de fréquence des premières impulsions de lumière laser, afin de former des impulsions de lumière laser à fréquence doublée ;
un appareil de DFG (744) configuré pour effectuer une génération de fréquence différence en utilisant les impulsions de lumière laser à fréquence doublée et la lumière laser à la seconde longueur d'onde, afin de former des impulsions de lumière laser de fréquence différence ; et
un second appareil de SHG (746) configuré pour effectuer un doublement de fréquence des impulsions de lumière laser de fréquence différence, afin de former les impulsions de lumière laser de sortie.

13. Système optique (750, 800, 900, 1000) pour une excitation de Rydberg, le système optique comprenant une source d'impulsions optiques (300, 350, 400, 450, 500, 600, 700, 850, 950, 1050) selon l'une quelconque des revendications 1 à 12 et une chambre d'excitation (752, 802, 902, 1002).
